# EUROPEAN PATENT SPECIFICATION

(11) **EP 3 683 425 B1**
(45) Date of publication and mention of the grant of the patent: **26.04.2023**
(21) Application number: 19213797.4
(22) Date of filing: 05.12.2019
(51) Int. Cl.: F02C 7/277, F01D 25/34

(54) **PRESSURE REGULATING STARTER VALVE**
DRUCKREGEL-STARTERVENTIL
SOUPAPE DE DÉMARREUR À RÉGULATION DE PRESSION

(30) Priority: 17.01.2019 US 201916249980
(43) Date of publication of application: 22.07.2020
(73) Proprietor: Hamilton Sundstrand Corporation, Charlotte, NC 28217-4578 (US)
(72) Inventor: DEHAIS, John M., Windsor, CT 06095 (US)
(74) Representative: Dehns

(56) References cited:
- US-A- 4 617 958
- US-A1- 2009 314 364
- US-A1- 2018 223 738
- US-B1- 9 957 899

## Description

### BACKGROUND

This disclosure relates to valve systems and more particularly starter valve systems for gas turbine engines.

A gas turbine engine typically includes a fan section, a compressor section, a combustor section, and a turbine section. Air moves into the engine through the fan section. Airfoil arrays in the compressor section rotate to compress the air, which is then mixed with fuel and combusted in the combustor section. The products of combustion are expanded to rotatably drive airfoil arrays in the turbine section. Rotating the airfoil arrays in the turbine section drives rotation of the fan and compressor sections. The compressor section and turbine section each have multiple stages of blades that rotate about a central axis and multiple stages of vanes that are stationary relative to the central axis.

Some gas turbine engines, such as high efficiency gas turbine engines, may undergo a thermal stabilization or cooling cycle prior to engine operation. Gas turbine engines, may utilize an air turbine starter for a cooling cycle and subsequent spool up to ignition. This air turbine starter may also be utilized for normal engine starting cycles. A traditional shutoff valve used to control airflow to the air turbine starter for the cooling cycle and spool up may experience rapid wear, which may lead to frequent maintenance and/or replacement of the valve. Pressure regulating valves are disclosed in US 2018/223738, US 4,617,958, US 2009/314364 and US 9,957,899.

### SUMMARY

In one aspect, a turbine engine system is provided as defined by claim 1.

In a further embodiment of any of the above, the position of the flow control valve is proportional to a current provided to the torque motor servo-valve.

In a further embodiment of any of the above, the flow control valve is a butterfly valve that has a disk rotatable about a shaft between an open position and a closed position.

In a further embodiment of any of the above, the flow control valve is configured to rreceive the flow of fluid that is bleed air from an auxiliary power unit.

In a further embodiment of any of the above, the flow control valve is configured to receive the flow of fluid that is bleed air from another engine.

In a further embodiment of any of the above, the torque motor servo-valve is configured to control the actuator in a motoring mode.

In a further embodiment of any of the above, the motoring mode permits the engine starter to operate at a lower speed.

The pneumatic control is configured to provide over-torque protection to the engine starter.

In a further embodiment of any of the above, the pneumatic control is configured to control the flow control valve in a cross bleed start mode.

In a further embodiment of any of the above, a manual wrench feature is configured to permit an operator to manually control the actuator.

In a further embodiment of any of the above, the starter valve assembly does not contain a solenoid.

In another exemplary embodiment not falling within the wording of the claims, a valve assembly for an engine includes a flow control valve that is configured to move between an open position and a closed position. An actuator is configured to actuate the valve between the open and closed positions. A pneumatic control is in communication with the actuator. A torque motor servo-valve is in communication with the actuator and is configured to vary a position of the flow control valve between the open and closed positions.

In a further embodiment of any of the above, the flow control valve is configured to meter a flow of fluid to an engine starter that is configured to operate in a motoring mode in response to a current provided to the torque motor servo-valve.

The flow control valve is movable to an infinite number of positions between the open and closed positions.

The pneumatic control is configured to provide over torque protection to the turbine.

In a further embodiment of any of the above, the actuator is a pneumatic half area actuator that has a spring and a diaphragm. The flow control valve is a butterfly valve.

In a further embodiment of any of the above, the valve assembly does not contain a solenoid.

In another aspect, a method of operating a turbine engine is provided as defined by claim 9.

The method provides a pneumatic control in communication with the flow control valve. The pneumatic control is configured to provide pressure regulation and prevent over torque.

### BRIEF DESCRIPTION OF THE DRAWINGS

The disclosure can be further understood by reference to the following detailed description when considered in connection with the accompanying drawings.
Figure 1 is a schematic view of an example of a gas turbine engine starter system.
Figure 2 is a view of a starter valve assembly according to an exemplary embodiment.
Figure 3A is a cross-sectional view of a starter valve assembly according to an exemplary embodiment.
Figure 3B is a cross-sectional view of a portion of a starter valve assembly according to an exemplary embodiment.
Figure 4 is a schematic view of an example starter valve assembly.

### DETAILED DESCRIPTION

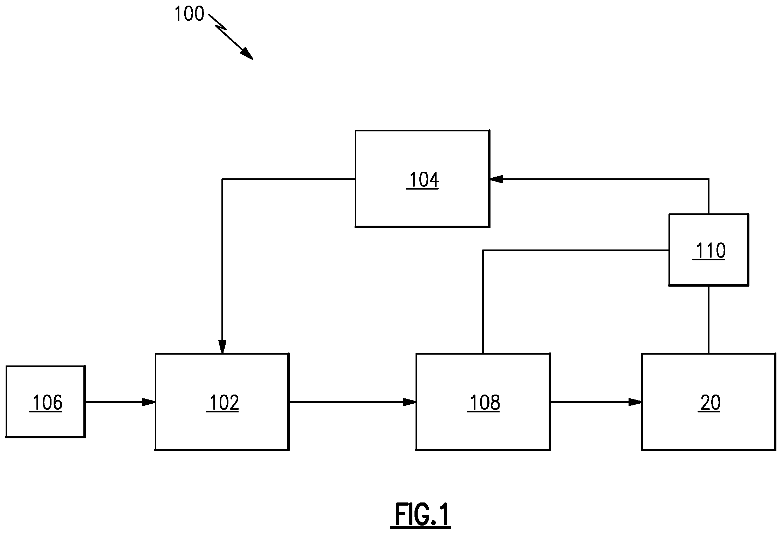

Figure 1 schematically illustrates an example system 100 for controlling a starter valve assembly 102 and regulating airflow to an engine component. The system 100 includes a turbine engine 20. The turbine engine 20 may be a gas turbine engine, for example. Gas turbine engines are known, and may generally include a fan section, a compressor section, a combustor section and a turbine section. The fan section drives air along a bypass flow path in a bypass duct and also drives air along a core flow path C for compression and communication into the combustor section then expansion through the turbine section. The compressor section and turbine section typically include rotors having a plurality of blades that rotate about an engine axis. The gas turbine engine 20 may be a two-spool turbofan gas turbine engine, a three-spool architecture, a direct drive turbofan, an industrial gas turbine (IGT), or any gas turbine engine as desired.

Various components of gas turbine engine 20 may heat or cool at different rates following operation and shutdown, leading to uneven thermal expansion. This uneven thermal expansion may physically deform engine components. For example, the thermal inequality may lead to bowed rotors, which can cause deflection of the rotor systems. Starting the engine 20 in this bowed condition can lead to tip strike of the rotor blades against nearby engine components, such as blade outer air seals (BOAS).

The system 100 includes a starter valve assembly 102. The starter valve assembly 102 described herein may help provide more uniform warm up and/or cooling of gas turbine engine components during start-up and/or shutdown and may reduce engine maintenance time of valves in the air turbine starter (ATS) 108. A starter valve assembly 102 may regulate airflow to the air turbine starter. Controlling the airflow to the air turbine starter 108 permits regulation of the engine speed to uniformly distribute engine temperature. This may help reduce the bowing of rotor systems in the engine 20, particularly during engine start-up and/or shutdown.

The system 100 may include a controller 104. The controller 104 may be a full authority digital engine control (FADEC), for example. The controller 104 may be in electrical communication with the valve assembly 102 and configured to control the valve assembly 102. The valve assembly 102 controls an output pressure of the airflow from the valve assembly 102.

The valve assembly 102 may be in communication with an input 106 of an engine component. In one example, the valve assembly 102 is in fluid communication with the input 106 and receives compressed air from the engine component. The input 106 may be bleed air pressure from an auxiliary power unit (APU) in one example. In this configuration, the engine 20 may be started via an APU ground start. For an APU ground start, an APU is started, then bleed air from the APU is directed to the turbine starter 108 via the starter valve 102 to start rotating a component of the engine 20. The input 106 may be bleed air from another engine in another example. In this configuration, the engine 20 may be started via a cross-bleed start. The input 106 may be connected to the valve assembly 102 via a bleed manifold. The valve assembly 102 may receive compressed air from the input 106 and deliver a controlled pressurized airflow to a turbine starter 108. In one example, the turbine starter 108 receives compressed air from the valve assembly 102, which drives a turbine wheel and gear shaft, which may be operatively coupled to the gas turbine engine 20. The turbine starter 108 starts rotating the gas turbine engine 20 during start-up. In one example, increased airflow to the turbine starter 108 results in increased rotational speed. Thus, the valve assembly 102 controls the rotational speed of the turbine starter 108 by controlling airflow to the turbine starter 108.

The system 100 may include a sensor 110 in communication with the controller 104. The sensor 110 may also be coupled to the gas turbine engine 20 and/or the turbine starter 108. The sensor may measure a speed of the gas turbine engine 20 and/or the turbine starter 108, for example. The sensor 110 may provide feedback to the controller 104, for example, which may generate a command based on the feedback received from the sensor 110.

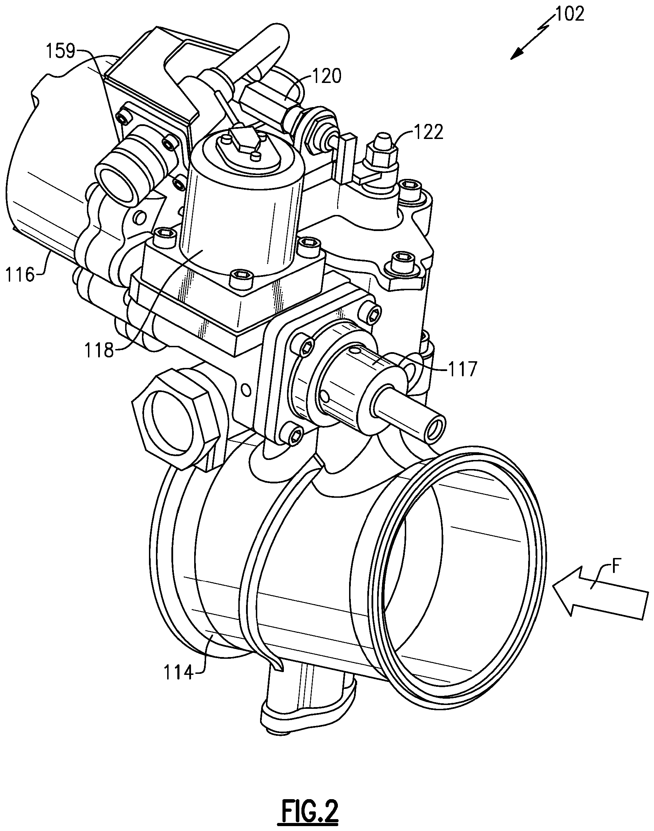

Figure 2 illustrates a starter valve assembly 102 according to an exemplary embodiment. The valve assembly 102 is a pressure regulating valve with engine motoring control. The valve assembly 102 permits the starter 108 to run in a motoring mode, which permits the engine 20 to be run at lower speeds. In one example, the engine 20 runs at a speed that is 20% to 60% of a normal engine start rotational speed in the motoring mode. The valve assembly 102 provides a torque motor servo valve in place of known mechanical regulators. The valve assembly 102 provides pneumatic pressure regulation and modulation control using a torque motor. The valve assembly 102 generally includes a flow control valve 114, an actuator 116, a pneumatic control 117, and a torque motor servo-valve 118. The flow control valve 114 is movable between an open position and a closed position. The actuator 116 moves the flow control valve 114 between the open and closed positions based on input from the torque motor servo-valve 118 and the pneumatic control 117. The flow control valve 114 is movable to an infinite number of positions between the open and closed positions. The position of the flow control valve 114 may be proportional to a current provided to the torque motor servo-valve 118, for example.

The valve assembly 102 may further include a closed position switch 120 and a manual wrench 122. The closed position switch 120 and manual wrench 122 may also move the flow control valve 114 between the open and closed positions. The manual wrench 122 may permit an operator to manually open and close the valve 114, for example.

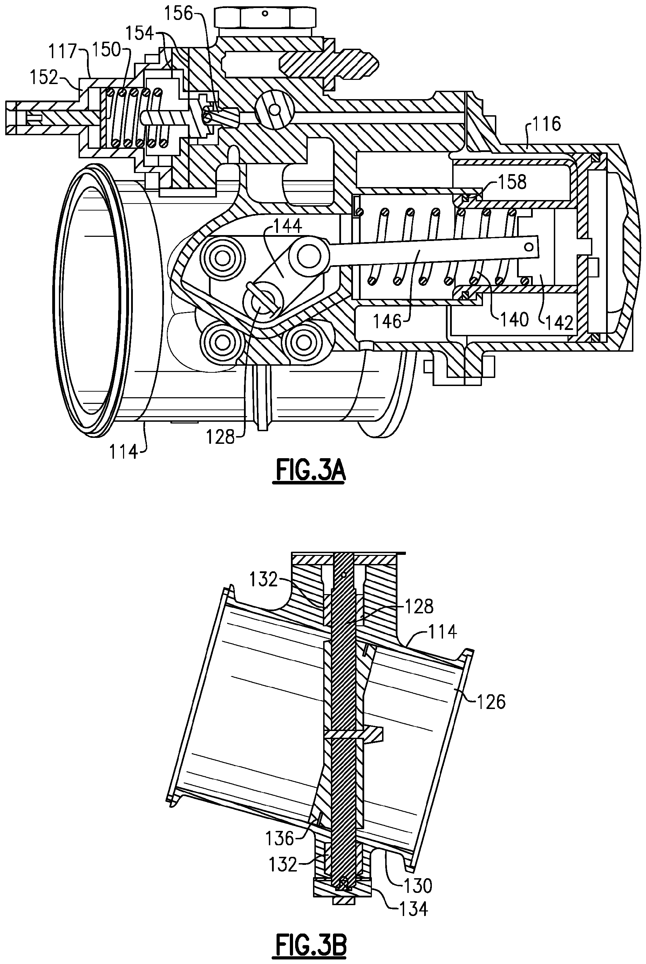

Figure 3A illustrates a cross sectional view of a portion of the valve assembly 102. The flow control valve 114 is rotated between the open and closed positions via the actuator 116. In the illustrated embodiment, the actuator 116 is a pneumatic halfarea actuator 116. The actuator 116 may connect to a downstream pressure port. The actuator 116 may include an actuator spring 140 configured to press against a piston 142, which is connected to an actuator crank 144 via a connecting link 146. The actuator crank 144 is connected to the valve shaft 128 and moves the flow control valve 114 between the open and closed positions. The actuator 116 receives input from the torque motor servo valve 118 and from the pneumatic control 117.

As shown in Figure 3B, and with continuing reference to Figures 2 and 3A, the valve 114 may be a butterfly valve. In a further embodiment, the butterfly valve 114 may have a diameter of about 3 inches (7.62 cm). The butterfly valve 114 receives a flow F from the input 106, and delivers the flow F to the engine starter 108. The butterfly valve 114 generally includes a butterfly disk 126 rotatable about a valve shaft 128 and positioned in a valve housing 130. The valve shaft 128 may be held in place via shaft bushings 132 and a thrust plate 134. A seal ring 136 may be provided between the disk 126 and the housing 130. Although a butterfly valve is shown, other types and sizes of flow control valves may be contemplated within the scope of this disclosure. The butterfly valve 114 may be controlled via the actuator 116 in response to the pneumatic control 117 and/or the torque motor servo valve 118. In one example, the butterfly valve 114 is operated via the pneumatic control 117 during cross bleed engine starts, and is operated via the torque motor servo valve 118 when the engine starter 108 is in a motoring mode.

The pneumatic control 117 provides over-torque protection for the turbine starter 108. The pneumatic control 117 includes a control spring 150 within a control cover 152, a control diaphragm 154, and a control nozzle 156 (shown in Figure 3A). The control nozzle 156 meters pneumatic fluid to a servo piston and diaphragm 142 of the actuator 116. The nozzle 156 controls the pressure on the large side of the actuator 116. The pressure on a piston 158 is equal to a valve inlet pressure Pᵥᵢ at the valve inlet. This pressure Pᵥᵢ, along with the spring 140, provide a closing force to close the valve 114. A pressure of fluid against the diaphragm 154 is balanced against the spring force of the control spring 150. When pressure against the diaphragm 154 increases, the valve 114 closes, and when the pressure decreases, the valve 114 opens. The pneumatic control 117 compares an ambient pressure with a valve outlet pressure Pᵥₒ, in one example to prevent engine over torque. In one example, the valve 114 opens when the pressure is higher than about 50 psi (344.7kPa) , and closes when the pressure is lower than about 50 psi (344.7kPa).

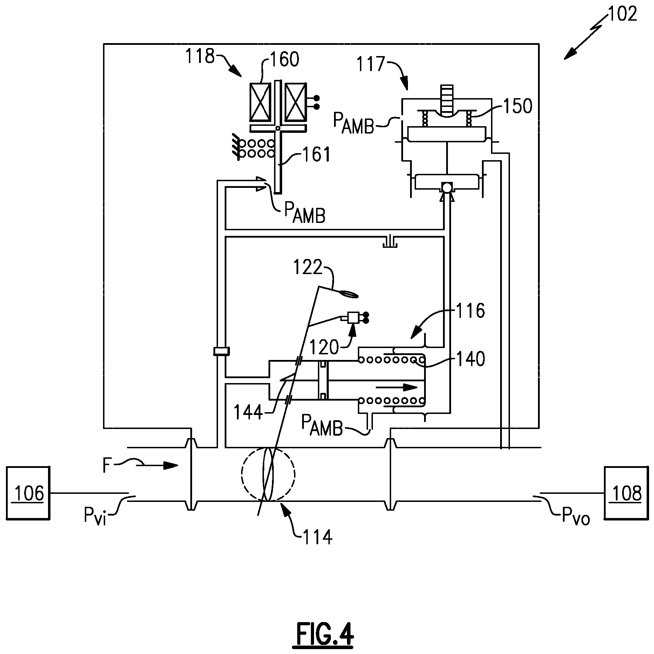

The torque motor servo valve 118 may be an electromagnetic device that controls a flow of fluid proportional to an electrical signal that it receives, such as an amount of current. The fluid may be a pneumatic fluid, for example. The torque motor servo valve 118 includes a torque motor 160 and an armature 161 (shown in Figure 4). The torque motor servo valve 118 responds to changes in an input current and varies a position of the armature 161 in response to the input current. A position of the armature 161 may be proportional to the input current, such that the position of the armature 161 may be fully open, fully closed, or anywhere in between the fully open and fully closed positions. Thus, the armature 161 has an infinite number of positions between the fully open and fully closed positions. Servo valves can continuously vary the pressure they supply, rather than having only a binary on and off, allowing precise control of the pneumatic actuator 116. The torque motor servo valve 118 may be configured to receive a command signal from the control 104 to vary a position of the armature 161 and thus control the valve 114 and engine starter 108.

Figure 4 is a functional schematic view of an example starter valve 102. The flow F of fluid into the valve 114 has a valve inlet pressure Pᵥᵢ at a valve inlet, and a valve regulation setpoint or valve outlet pressure Pᵥₒ at a valve outlet. In this illustration, the valve 114 is in the closed position, and the torque servo motor 160 is de-energized. As shown, both the torque servo valve 118 and the pneumatic control 117 are in communication with the actuator 116, and thus the valve 114. The valve 114 may be fully closed, fully open, or modulating, depending on current to the torque motor 160 and the valve inlet pressure Pᵥᵢ and the valve outlet pressure Pᵥₒ.

When the system 100 is off, the torque motor 160 is not energized, and thus receives no current. In this state, the valve 114 is fully closed. When the valve is energized, the valve 114 is open or regulating. In one example, the torque motor 160 receives about 50 mA of current when the system 100 is on. In other examples, the torque motor 160 may modulate between 0 and 50 mA, as it relates to engine speed. In some embodiments, the torque motor may also have rated currents other than 50 mA, such as 100 mA or 150 mA, for example. When the system 100 is on, it has several modes, such as an APU Ground Start or APU Maintenance mode, an Engine Cross Bleed Start mode, and an Engine Motoring mode.

The APU Ground Start or APU Maintenance mode has the valve 114 in the fully open position. In this mode, the torque motor 160 is energized, and the outlet pressure Pᵥₒ is equal to the inlet pressure Pᵥᵢ. The inlet pressure Pᵥᵢ may be greater than about 10 psig (68.9 kPa), for example. The Engine Cross Bleed Start mode may have the valve 114 fully open or partially open. In this mode, the torque motor 160 is energized. When the valve 114 is fully open in the Engine Cross Bleed Start mode, the outlet pressure Pᵥₒ is equal to the inlet pressure Pᵥᵢ. The inlet pressure Pᵥᵢ may be greater than or equal to about 10 psig (68.9 kPa). When the valve 114 is partially open in the Engine Cross Bleed Start mode, the valve inlet pressure Pᵥᵢ is greater than the valve outlet pressure Pᵥₒ.

When the valve is in the Engine Motoring Mode, the valve 114 is between the open and closed positions. The valve 114 is modulating a flow of fluid F. The Engine Motoring Mode permits a smaller amount of fluid to pass through the valve 114 than the fully open position, which permits the engine starter 108 to rotate at a slower speed than when the valve 114 is in the fully open position. In the Engine Motoring Mode, the torque motor 160 receives less than 50 mA, for example, and the valve inlet pressure Pᵥᵢ may be greater than about 10 psig (68.9kPa), for example. The pneumatic control 117 prevents over torque of the engine starter 108 and turbine of the engine 20, while the torque motor servo-valve 118 permits modulating the valve 114 in an engine motoring mode. The Engine Motoring Mode allows a turbine of the engine 20 to turn slower than during normal operation, which may be beneficial before or after a flight to permit the turbine to warm up or cool down to help prevent bowing.

Known starter valves utilize solenoids for control of the aircraft engine starter. The starter valve functions to control the pressure from the APU or engine into the air turbine starter. Often pulse-width modulation (PWM) signals are employed to control these solenoids for low speed engine motoring during bowed rotor starts. Some systems utilize PWM solenoids to provide low engine motoring during bowed rotor starts. However, PWM solenoids can be prone to reliability issues.

The above described system provides a torque motor servo valve on a starter valve that utilizes a pressure regulation feature for protection of the engine starter. When the disclosed valve is used for cross bleed starts using engine bleed pressures, a pressure regulation feature is required to limit the pressure into the starter to provide over-torque protection. The disclosed system uses a torque motor servo valve in place of the solenoid on a starter valve for both open and close operations and engine motoring control provides an efficient and reliable approach. This system is more reliable than previous systems.

The foregoing description shall be interpreted as illustrative and not in any limiting sense. A worker of ordinary skill in the art would understand that certain modifications could come within the scope of this disclosure. For these reasons, the following claims should be studied to determine the scope of the invention.

## Claims

1. A turbine engine system, comprising:
an engine starter (108) coupled to a turbine engine; and
a starter valve assembly (102) configured to provide a flow of fluid to the engine starter, the starter valve assembly having a flow control valve (114) movable via an actuator, a pneumatic control (117) in communication with the actuator, and a torque motor servo-valve (118) in communication with the actuator; wherein the pneumatic control is configured to provide over-torque protection to the engine starter wherein the pneumatic control (117) comprises:
a control spring (150) within a control cover (152);
a control diaphragm (154) and,
a control nozzle (156) configured to meter a pneumatic fluid to a servo-piston and diaphragm (142) of the actuator (116) such that a pressure of fluid against the diaphragm (142) is balanced against a spring force of the control spring (150);and **characterized in that** the torque motor servo-valve is configured to vary a position of the flow control valve to an infinite number of positions between an open position and a closed position; wherein the torque motor servo-valve has a torque motor (160) and an armature (161), wherein the torque motor controls a position of the armature which controls a flow of the pneumatic fluid to the actuator.

2. The system of claim 1, wherein the position of the flow control valve is proportional to a current provided to the torque motor servo-valve.

3. The system of claim 1 or 2, wherein the flow control valve is a butterfly valve having a disk rotatable about a shaft between an open position and a closed position.

4. The system of any preceding claim, wherein the flow control valve is configured to receive the flow of fluid that is bleed air from an auxiliary power unit, or wherein the flow control valve is configured to receive the flow of fluid that is bleed air from another engine.

5. The system of any preceding claim, wherein the torque motor servo-valve is configured to control the actuator in a motoring mode.

6. The system of any preceding claim, wherein the pneumatic control is configured to control the flow control valve in a cross bleed start mode.

7. The system of any preceding claim, comprising a manual wrench feature (122) configured to permit an operator to manually control the actuator.

8. The system of any preceding claim, wherein the starter valve assembly does not contain a solenoid.

9. A method of operating the turbine engine system according to claim 1, the method comprising:
providing an electrical signal to the torque motor servo valve that is in communication with the flow control valve;
metering a flow of fluid from an input to the engine starter with the flow control valve; and
operating the engine starter in a motoring mode with the flow of fluid; and further comprising:
providing the pneumatic control in communication with the flow control valve, the pneumatic control configured to provide pressure regulation.

## Patentansprüche

1. Turbinentriebwerksystem, umfassend:
einen Triebwerkstarter (108), der an ein Turbinentriebwerk gekoppelt ist; und
eine Starterventilbaugruppe (102), die dazu konfiguriert ist, eine Fluidströmung zu dem Triebwerkstarter bereitzustellen, wobei die Starterventilbaugruppe ein Strömungssteuerventil (114), das über einen Aktor beweglich ist, eine Pneumatiksteuerung (117) in Kommunikation mit dem Aktor und ein Drehmomentmotorservoventil (118) in Kommunikation mit dem Aktor aufweist; wobei die Pneumatiksteuerung dazu konfiguriert ist, Schutz vor übermäßigem Drehmoment für den Triebwerkstarter bereitzustellen, wobei die Pneumatiksteuerung (117) Folgendes umfasst:
eine Steuerungsfeder (150) innerhalb einer Steuerungsabdeckung (152) ;
eine Steuerungsmembran (154) und
eine Steuerungsdüse (156), die dazu konfiguriert ist, ein Pneumatikfluid für einen Servokolben und eine Membran (142) des Aktors (116) derart abzumessen, dass ein Druck des Fluids gegen die Membran (142) gegen eine Federkraft der Steuerungsfeder (150) ausbalanciert ist; und **dadurch gekennzeichnet, dass** das Drehmomentmotorservoventil dazu konfiguriert ist, eine Position des Strömungssteuerventils in eine unendliche Anzahl von Positionen zwischen einer offenen Position und einer geschlossenen Position zu variieren; wobei das Drehmomentmotorservoventil einen Drehmomentmotor (160) und einen Anker (161) aufweist, wobei der Drehmomentmotor eine Position des Ankers steuert, wodurch eine Strömung des Pneumatikfluids zu dem Aktor gesteuert wird.

2. System nach Anspruch 1, wobei die Position des Strömungssteuerventils proportional zu einem Strom ist, der dem Drehmomentmotorservoventil bereitgestellt ist.

3. System nach Anspruch 1 oder 2, wobei das Strömungssteuerventil ein Drosselventil mit einer Scheibe ist, die um eine Welle zwischen einer offenen Position und einer geschlossenen Position drehbar ist.

4. System nach einem vorhergehenden Anspruch, wobei das Strömungssteuerventil dazu konfiguriert ist, die Fluidströmung aufzunehmen, bei der es sich um Zapfluft aus einem Hilfstriebwerk handelt, oder wobei das Strömungssteuerventil dazu konfiguriert ist, die Fluidströmung aufzunehmen, bei der es sich um Zapfluft aus einem anderen Triebwerk handelt.

5. System nach einem vorhergehenden Anspruch, wobei das Drehmomentmotorservoventil dazu konfiguriert ist, den Aktor in einem Motormodus zu steuern.

6. System nach einem vorhergehenden Anspruch, wobei die Pneumatiksteuerung dazu konfiguriert ist, das Strömungssteuerventil in einem Kreuzzapfstartmodus zu steuern.

7. System nach einem vorhergehenden Anspruch, umfassend ein manuelles Schlüsselmerkmal (122), das dazu konfiguriert ist, einem Bediener das manuelle Steuern des Aktors zu gestatten.

8. System nach einem vorhergehenden Anspruch, wobei die Starter-ventilbaugruppe keine Magnetspule enthält.

9. Verfahren zum Betreiben des Turbinentriebwerksystems nach Anspruch 1, wobei das Verfahren Folgendes umfasst:
Bereitstellen eines elektrischen Signals für das Drehmomentmotorservoventil, das mit dem Strömungssteuerventil in Kommunikation steht;
Abmessen einer Fluidströmung aus einem Eingang zu dem Triebwerkstarter mit dem Strömungssteuerventil; und
Betreiben des Triebwerkstarters in einem Motormodus mit der Fluidströmung; und ferner umfassend:
Bereitstellen der Pneumatiksteuerung in Kommunikation mit dem Strömungssteuerventil, wobei die Pneumatiksteuerung dazu konfiguriert ist, eine Druckregulierung bereitzustellen.

## Revendications

1. Système de moteur à turbine, comprenant :
un démarreur de moteur (108) couplé à un moteur à turbine ; et
un ensemble soupape de démarreur (102) configuré pour fournir un écoulement de fluide au démarreur de moteur, l'ensemble soupape de démarreur ayant une soupape de commande de débit (114) mobile via un actionneur, une commande pneumatique (117) en communication avec l'actionneur, et une servovalve de moteur couple (118) en communication avec l'actionneur ; dans lequel la commande pneumatique est configurée pour fournir une protection contre les surcouples au démarreur de moteur dans lequel la commande pneumatique (117) comprend :
un ressort de commande (150) à l'intérieur d'un couvercle de commande (152) ;
un diaphragme de commande (154) et,
une buse de commande (156) configurée pour doser un fluide pneumatique vers un servo-piston et un diaphragme (142) de l'actionneur (116) de sorte qu'une pression de fluide contre le diaphragme (142) est équilibrée par rapport à une force élastique du ressort de commande (150) ; et **caractérisé en ce que** la servovalve de moteur couple est configurée pour faire varier une position de la soupape de commande d'écoulement à un nombre infini de positions entre une position ouverte et une position fermée ; dans lequel la servovalve de moteur couple a un moteur couple (160) et une armature (161), dans lequel le moteur couple commande une position de l'armature qui commande un écoulement du fluide pneumatique vers l'actionneur.

2. Système selon la revendication 1, dans lequel la position de la soupape de commande d'écoulement est proportionnelle à un courant fourni à la servovalve de moteur couple.

3. Système selon la revendication 1 ou 2, dans lequel la soupape de commande d'écoulement est une vanne papillon ayant un disque pouvant tourner autour d'un arbre entre une position ouverte et une position fermée.

4. Système selon une quelconque revendication précédente, dans lequel la soupape de commande d'écoulement est configurée pour recevoir l'écoulement de fluide qui est de l'air de purge d'un groupe auxiliaire de puissance, ou dans lequel la soupape de commande d'écoulement est configurée pour recevoir l'écoulement de fluide qui est de l'air de purge d'un autre moteur.

5. Système selon une quelconque revendication précédente, dans lequel la servovalve de moteur couple est configurée pour commander l'actionneur en mode moteur.

6. Système selon une quelconque revendication précédente, dans lequel la commande pneumatique est configurée pour commander la soupape de commande d'écoulement dans un mode de démarrage de purge croisée.

7. Système selon une quelconque revendication précédente, comprenant une caractéristique de clé manuelle (122) configurée pour permettre à un opérateur de commander manuellement l'actionneur.

8. Système selon une quelconque revendication précédente, dans lequel l'ensemble soupape de démarreur ne contient pas de solénoïde.

9. Procédé de fonctionnement du système de moteur à turbine selon la revendication 1, le procédé comprenant :
la fourniture d'un signal électrique à la servovalve de moteur couple qui est en communication avec la soupape de commande d'écoulement ;
le dosage d'un écoulement de fluide depuis une entrée vers le démarreur de moteur avec la soupape de commande d'écoulement ; et
le fonctionnement du démarreur de moteur en mode moteur avec l'écoulement de fluide ; et comprenant en outre :
la fourniture de la commande pneumatique en communication avec la soupape de commande d'écoulement, la commande pneumatique étant configurée pour fournir une régulation de pression.
